# EUROPEAN PATENT SPECIFICATION

(11) **EP 0 696 559 B1**
(45) Date of publication and mention of the grant of the patent: **22.07.1998**
(21) Application number: 95112407.2
(22) Date of filing: 07.08.1995
(51) Int. Cl.: C04B 28/06, A63D 15/00

(54) **Concrete slab for a billiard table**
Betonplatte für einen Billiardtisch
Dalle en béton pour table de billiards

(30) Priority: 12.08.1994 IT MI941742
(43) Date of publication of application: 14.02.1996
(73) Proprietor: Guzzetti, Roberto, 20092 Cinisello Balsamo (Milano) (IT)
(72) Inventor: Guzzetti, Roberto, 20092 Cinisello Balsamo (Milano) (IT)
(74) Representative: Faggioni, Giovanmaria, Dr.

(56) References cited:
- FR-A- 2 594 703
- GB-A- 2 124 971
- US-A- 2 279 262
- US-A- 3 173 884
- US-A- 4 921 537
- US-A- 5 161 797
- CHEMICAL ABSTRACTS, vol. 103, no. 8, 26 August 1985 Columbus, Ohio, US; abstract no. 58277g, P. VASYUKOV ET AL page 278; & SU-A-1 152 945 (ID.)
- RAPRA ABSTRACTS, vol. 31, no. 4, April 1994 SHREWSBURY GB, XP 000444059 R151597 'FIBRIN '23''

## Description

The object of the present invention is a concrete slab, especially suited for use as a billiard table, and a billiard table constructed with said slab.

Any billiard fundamentally consists of a base, of a framework fixed onto the base and having a composite structure of heartwood beams, and of a gaming table formed of a stone slab - generally slate - fixed onto said framework and bound by side cushions, the surface of the table being covered by a woollen cloth. The useful standard dimensions of the gaming table vary from a maximum of 3.66 x 1.83 meters, to a minimum of 1.80 x 0.90 m; the thickness of the slab is normally between 50 and 60 mm.

For reasons of transport, handling and stability of the slab, as well as for structural reasons - in that the material involved is extracted from a cave and it is unthinkable to always be able to obtain slabs of large dimensions - the billiard table normally requires to be formed in several pieces. For instance, a 3.00 x 1.60 m table is formed by three 1.00 x 1.60 m slabs, whereas a top size table of 3.74 x 1.95 m is generally formed in five pieces. Taking into account the 50-60 mm thickness and the specific weight - 2.60-2.65 - of slate, one thus obtains slabs which weigh, on an average, 200-220 kg and which therefore still require four people for their handling and transport (as is necessary when having to install billiard tables in rooms where neither cranes nor hoisters can be used).

As known, professional billiard tables must have very specific and constant technical characteristics, and should be constructed in a practically perfect manner to allow optimal gaming conditions. The following are required in particular:
- absolute dimensional precision in the machining operations, to allow a perfect assembling between the slab pieces and with the adjoining parts, as the side cushions, as well as a levelness with no discontinuousness;
- perfectly ground sliding surface, to avoid deviations of the balls from the right trajectory, or rolling noises;
- great stability in time and strain as well as ultimate strength; during use, the billiard table is in fact subject to thermal stresses due to the use of heating resistances incorporated into the table, and to mechanical stresses determined by the impacts of the balls.

Up to date it has been possible to realize billiard tables, fully answering these requirements, only with slabs of slate. However, the cost of these slabs - also due to the large machining rejections in the quarry - the great ecological problems connected with the management of the quarries and, last but not least, the problem of the exhaustion of some quarries, have determined the requirement to find alternative materials.

The present invention faces the problem of realizing a slab for a billiard table made of concrete. In actual fact, the first attempts made to use concrete slabs - GB-A-2124971, FR-A-2594703, US-A-5161797 - have definitely given negative results, since such slabs have proved to answer none of the aforespecified requirements for the following reasons: difficulty to obtain precise dimensional features owing to concrete shrinkage during setting; brittleness of their sliding surface and noisiness caused by rolling of the balls; scarce resistance to thermal and mechanical stresses.

The object of the present invention is to thus propose a concrete slab for a billiard table, whose technical features are not inferior to those of a slab of slate. Said object is reached with the characteristics mentioned in the characterizing part of claim 1.

In actual fact, it has surprisingly been found that, in order to give to the billiard table an adequate stability and make sure that the balls - while rolling, and when hitting the side cushions - do not cause too many vibrations or too much noise, it is essential for the specific weight of the slab to be at least equal to, or preferably higher than the weight of a slab of slate, i.e. at least 2.6 (Kg/dm³). This circumstance is all the more surprising for what concerns the rolling noise of the balls, to reduce which it had initially been thought - besides with fully negative results - of introducing in the concrete mixture some deafening material, as for example polystyrene foam, which obviously reduces the specific weight.

The idea of producing high density concrete, i.e. concrete having higher than the usual concrete, had already been proposed in US-A-3173884, but only to realize shieldings against nuclear rays; for the reason stated above, it was unthinkable to use this technique for producing slabs for billiard tables.

The increase in the specific weight of the concrete slab can be obtained by adding a filler of heavy material, i.e. having a specific weight at least higher than 3, and in particular - according to two advantageous embodiments of the present invention - by using, in the concrete mix, a basaltic gravel having a specific weight usually higher than 3, and especially a baryte gravel with specific weight of 4.35, or else by realizing an oversized reinforcement, or by associating to a light wire net reinforcement a further iron filler.

The technical characteristics and advantages of the slab according to the present invention shall anyhow be more evident from the following detailed description of some preferred embodiments thereof, given by way of example and illustrated on the accompanying drawings, in which:
Fig. 1 is a section view of a bush element to be incorporated into the slab of the present invention so as to form lateral fixing means;
Fig. 2 is a side view of a pin element apt to cooperate with the bush element of fig. 1;
Fig. 3 shows, in section, the temporary fixing of the bush element of fig. 1 onto a casting formwork of the slab according to the invention;
Fig. 4 shows, in section, the positioning side-by-side of two slabs provided with the fixing means of figs. 1 and 2;
Figs. 5 to 10 show how to form anchor holes into the slab according to the invention, by means of three different types of pins temporarily fixed to the formwork;
Figs. 11 and 12 are a section and a top view, showing a bolt system for anchoring the side cushions to the billiard table;
Figs. 13 and 14 are a plan and a section view on an enlarged scale, showing a heating system for the billiard table;
Figs. 15 and 16 show how to form anchor holes into the slab, following a different method in respect of figs. 5 to 10;
Fig. 17 is a diagrammatic plan view of a control board for the temperature of the billiard table;
Fig. 18 shows, in section, a different embodiment for positioning side by side two slabs of the billiard table;
Fig. 19 shows three slabs forming a complete billiard table, joined together through a tightening system allowing them to be positioned one next to the other so as to form a single smooth surface; and
Fig. 20 is a plan view on an enlarged scale, showing the tightening system between adjacent slabs.

As said, to reach the objects of the invention, the formula of the cement mix used to form the billiard table is of fundamental importance. In particular:
- As a hydraulic binder, use is made of a mixture of Portland cement and aluminous cement, combined with an anti shrink powder additive: the use of this special hydraulic binder has proved essential to reduce shrinkage to a minimum during curing of the concrete slab. This allows to obtain - without too many re-machinings - a slab with highly reduced dimensional tolerances, both for what concerns the full size of the slab and for what concerns the size of the holes or couplings present therein;
- As a filler, use is made of a fine quartz sand from 0 to 8 mm, as well as of a selected gravel from 8 to 20 mm. Preferably - according to a first embodiment of the present invention - use is made of a basaltic gravel with specific weight of at least 3 or, better still, of a baryte with specific weight of 4.35; this latter can form the total amount or only part of the gravel introduced in the mix, according to the final specific weight one wishes to obtain for the concrete slab.
- As a diffused and distributed reinforcement, to prevent the forming of microcracks and increase the toughness, it has proved of fundamental importance to add synthetic fibers, particularly polypropylene fibers having a length of at least 20 mm, even in fairly limited proportions, for example 0.02-0.04% in weight. The use of such fibers gives to the slabs a stability in time, whereby they undergo no distortions or cracks caused by ageing and by heating of the table.

Equally important is the metal reinforcement for the concrete slab, which basically consists of an electrowelded wire net, with a 4 mm rod and with 10x10 cm meshes, of a type easily found on the market. The mesh of the net will preferably be configured so as to perform a supporting function for the heating resistances, as better described hereinafter.

According to another preferred embodiment of the invention, to said wire net reinforcement there can be associated some additional steel, for instance rod pieces of the FeB 44 type with improved adherence, acting as weighting filler.

Of course, the first embodiment - wherein the filler essentially consists of basaltic gravel or of baryte - and the second embodiment - wherein the filler essentially consists of metal - do not exclude one another; it is in fact possible to obtain the desired specific weight of the concrete slab with a suitable proportion both of gravel and of metal.

The following Table I shows a preferential formula:

**TABLE I**

| Material | Quality | Quantity per cu.m. |
|---|---|---|
| special hydraulic binder | fast drying and controlled shrinkage | 350 - 700 Kg |
| sand | type 0 - 8 mm | 700 - 1100 Kg |
| gravel | type 8 - 20 mm | 600 - 1000 Kg |
| water | | 100 - 200 Kg |
| polypropylene fibers | length 20 mm | 0.5 - 1.0 Kg |
| steel reinforcement | electrowelded net | 30 - 50 Kg |
| steel filler | rod pieces FeB 44 | 200 - 300 Kg |

To obtain the slabs according to the invention, one proceeds first of all by mixing into a concrete mixer the described elements, which are then cast into a steel formwork. The bottom surface and the sides of the formwork are perfectly rigid, flat and ground, so that, once the slabs are seasoned and withdrawn from the formwork, the corresponding surfaces thereof already have good characteristics of levelness.

In a successive step - always according to a fundamental characteristic of the present invention - a protective layer of shockproof coating is applied onto the flat surface of the slab thus obtained. According to the invention, a layer of this type can be formed by spreading over the surface of the concrete slab a mix of quartz sand and air-cured synthetic resin, particularly epoxy resin. It will be preferable to use an epoxy resin with high chemical-mechanical strength, for instance of the type commercially known as SIKA 380. The quartz sand used will be a fine sand, for instance from 0.1 to 0.3 mm. Said mix will be applied into a layer having a thickness from a minimum of 1 mm up to a maximum of 5 mm.

Once said layer has hardened, with complete polymerization of the resin, the slab is subjected - always according to a characteristic of the invention - to a grinding operation, up to obtaining a perfectly flat and smooth top surface. It is essential for this grinding operation to be carried out with the different slabs forming the billiard table already mounted on the respective support frame, so as to eliminate, by grinding, not only any surface roughness on the slabs, but also any possible slight level differences between adjacent slabs.

The slabs produced with this technique have proved to be of great interest, not only for their final high technical quality - fully comparable to that of slate slabs - but also for the advantages they provide from the point of view of industrial production: practically no rejections, or minimum ones (just those resulting from the grinding operations) and highly constant quality, due to the use of materials which can be perfectly controlled and proportioned.

It is known, moreover, that billiard tables have to undergo supplementary machining operations in order to form through holes or other fixing points for coupling means, particularly for the reciprocal anchorage of adjacent slabs, for anchoring the slabs to the support frame, and for anchoring the side cushions.

According to an advantageous aspect of the present invention, said holes or other fixing points are already formed during casting of the concrete slab, by prearranging on the formwork some additional bodies which, once the slab is withdrawn, are apt to form suitable coupling recesses.

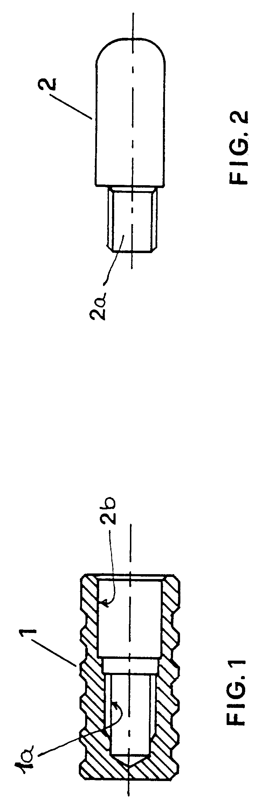

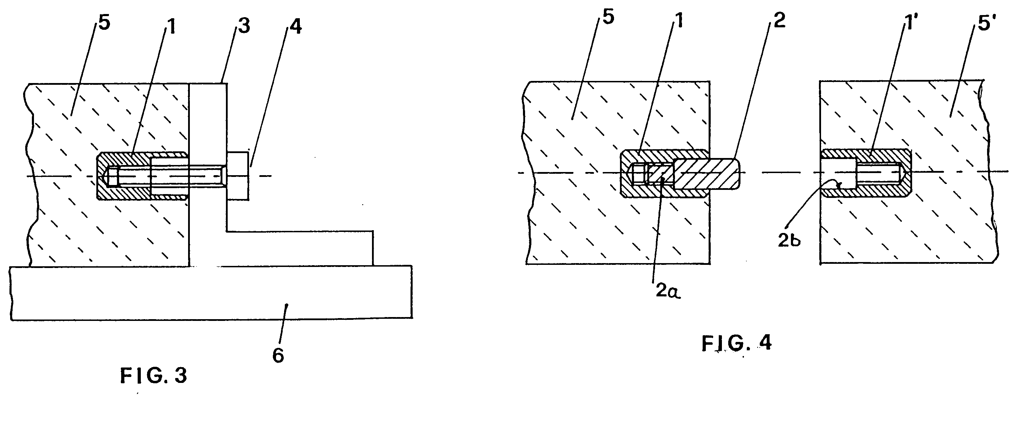

Figs. 1 and 2 show, as said, a bush element 1 and a pin element 2, acting as lateral fixing means. The bush 1 is fixed to the shoulder 3 of the formwork 6 (see fig. 3) by means of a bolt 4, which crosses the shoulder 3 and screws into the threaded part of the bush 1. Once it has been cast, the slab 5 incorporates the bush 1, as can also be seen in fig. 4. This figure shows the positioning side-by-side of two slabs 5 and 5', each comprising a bush 1 and respectively 1', which are coaxial and opposite. Into the bush 1 there is fixed a pin element 2, with its threaded shank 2a screwed into the threaded seat 1a, and with its head projecting from the slab and apt to fit into the widened seat 2b of the bush 1'. As said, this system allows to position two slabs side by side, in a perfectly adjusted position, it being understood that the grinding of the billiard table is carried out once the slabs have been set side-by-side and reciprocally adjusted and fixed in this manner.

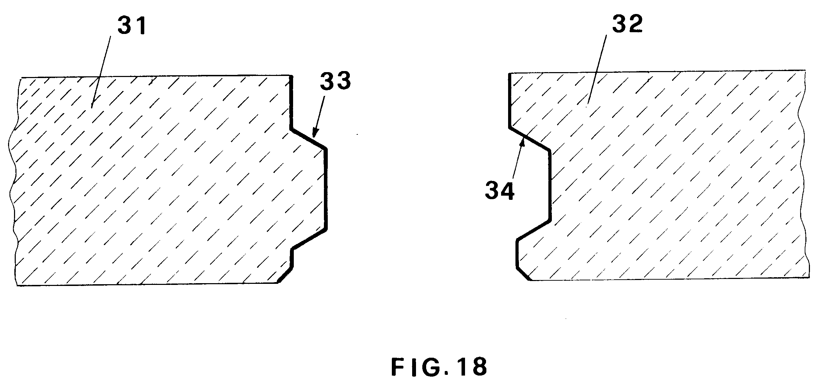

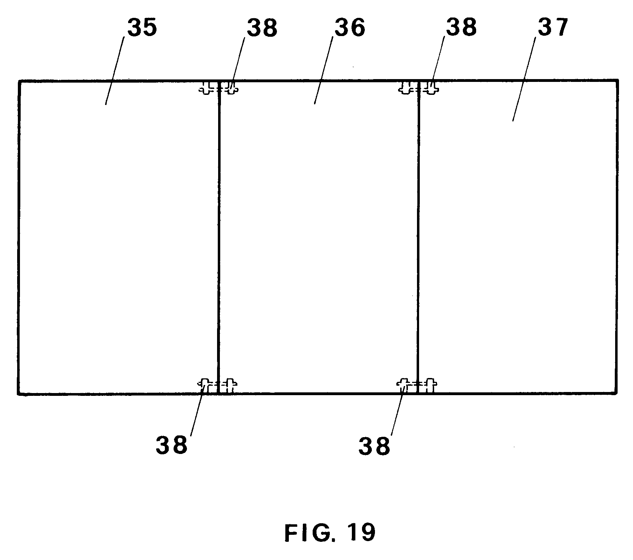

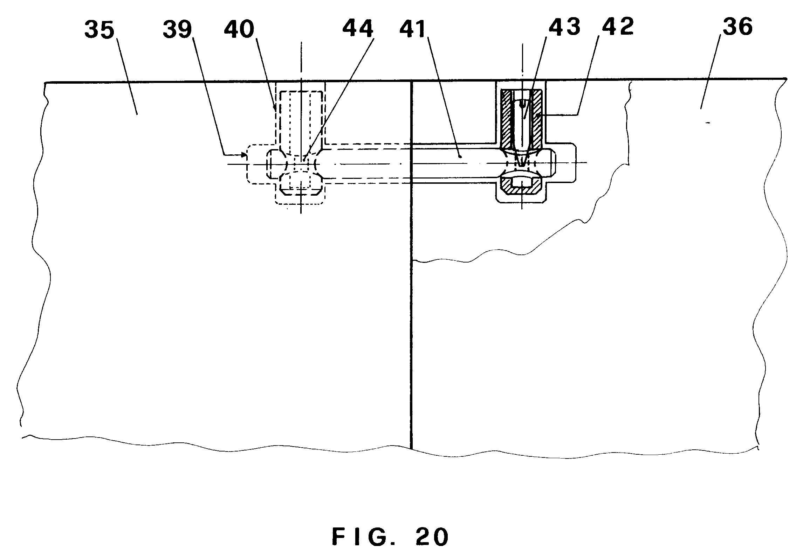

According to a different embodiment, illustrated in fig. 18, two slabs 31, 32, forming the billiard table can be positioned side by side and joined together - instead of by means of pins and bushes, as shown in fig. 4 - by suitably shaping their connecting edges 33, 34. Such edges of the slabs are obtained by correspondingly shaping the shoulders of the formwork. As shown in fig. 19 - which illustrates three slabs 35, 36, 37 forming a complete table - for the reciprocal fixing of the three slabs use is made of a fixing system 38 which allows to join them as if they were all in one piece, so as to obtain a single smooth surface. For this purpose, into the slabs there are formed dead holes 39, 40 (see Fig. 20), into which there are inserted a pin 41 and threaded bushes 42, into which there is positioned a screw 43; by tightening the screw 43, this latter presses onto the countersink 44 of the pin 41 and the slabs are thus positioned side by side and joined together.

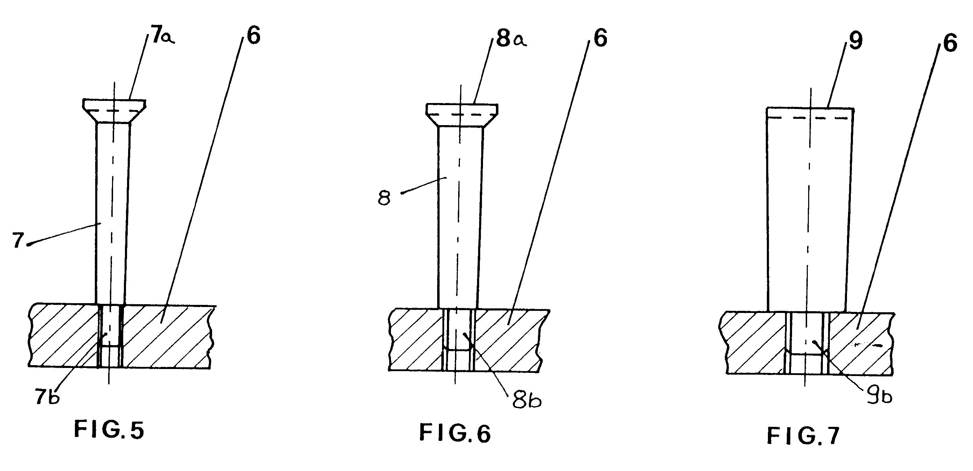

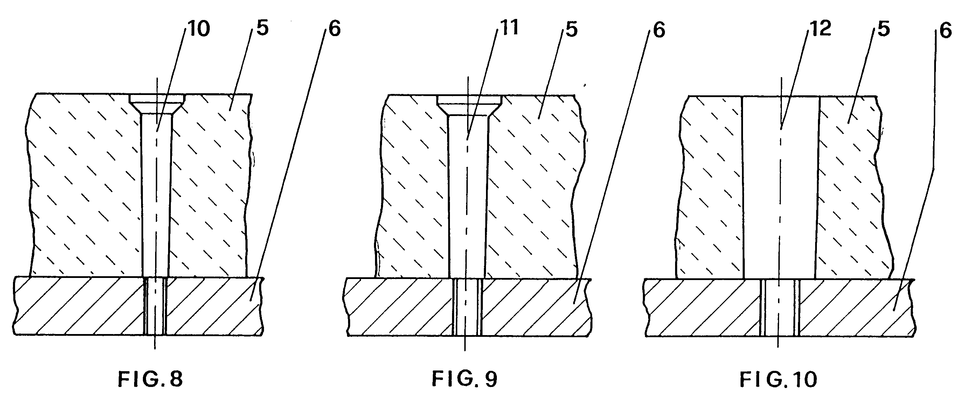

Another fixing problem concerns the anchorage of the slabs to the underlying surface of the support frame: for this purpose use is made of pin systems as those illustrated in figs. 5 to 10. Such pins have a comical configuration: the pins 7 and 8 have a comical body with a widened head 7a and 8a, while the pin 9 has a comical body with no head; all the pins have a threaded shank, 7b, 8b and 9b respectively, by which they screw into threaded holes formed into the bottom plate 6 of the formwork. Such pins are thus fixed to the bottom of the formwork and the casting of the slab is subsequently carried out. Once the casting has set, the pins can be unscrewed and drawn out, thereby leaving in the cast slab some holes 10, 11 and 12 (as shown in figs. 8 to 10), which can then be used for the anchorage to the support frame.

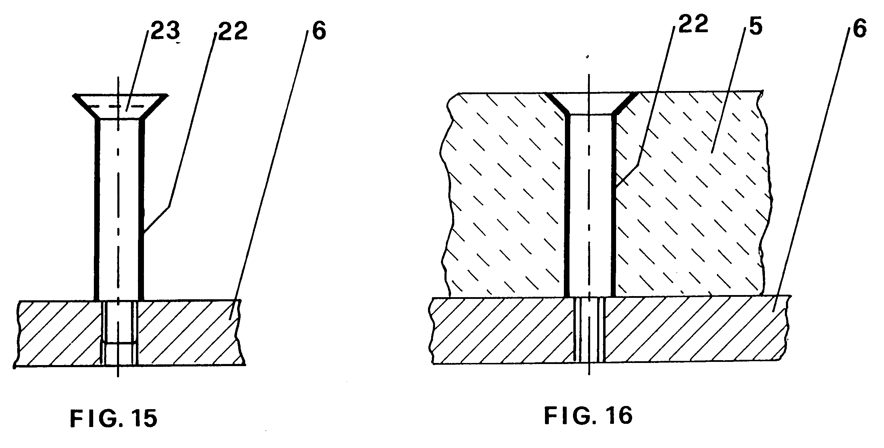

When the holes 10, 11, 12, are used to house bolts for fixing the slab to the billiard frame, said bolts are usually of large dimensions and they impart remarkable tractive forces on the table, particularly due to the fact that they are tightened with electric screwers. There is often also the requirement to frequently disassemble and reassemble the billiard table: as can be understood, this can cause an early wear of the coupling holes. In this case - as shown in the alternative embodiment of figs. 15 and 16 - it is preferable to form the coupling holes with bushes 22, for instance of plastic material or of metal. The bush 22 is kept in position by a temporary screw pin 23 (see fig. 15) - similar to the pins 7 and 8, of figs. 5 and 6 - which is drawn out after the casting has set (fig. 16), leaving the bush 22 integral with the slab 5.

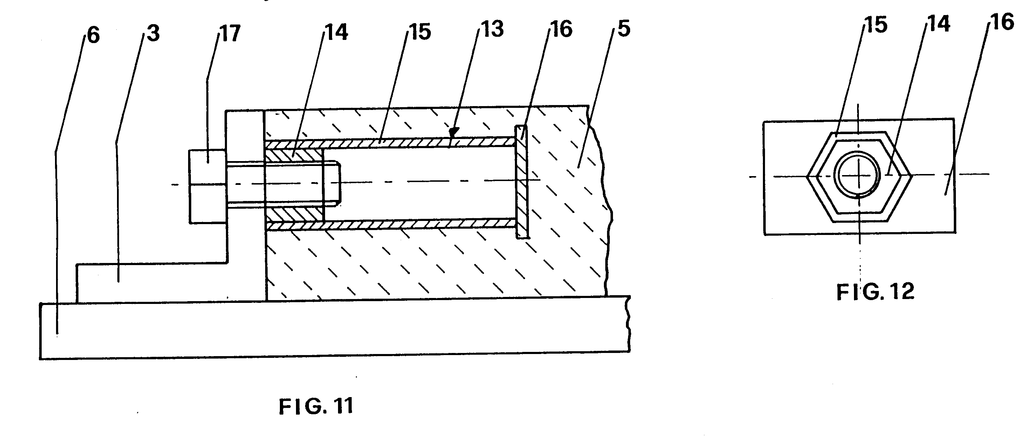

Figs. 11 and 12 illustrate systems to anchor the side cushions to the billiard table. In this case, use is made of bolts 13 which, in the embodiment shown, essentially consist of a nut 14 fixed at one end of a tubular body 15 - preferably an hexagonal tube, or at least shaped at this end so as to house the hexagonal nut 14 - the other end of which is closed by a welded plate 16. Similarly to the bush 1 (fig. 3), the bolt 13 is temporarily fixed to the shoulder 3 of the formwork by means of a bolt 17, which is removed after casting and hardening of the slab 5. The function of the plate 16 is not only to prevent the flow from penetrating into the tube 15 during casting, but also to take the torsional stresses and tractive efforts produced upon fixing of the side cushions to the plate 5 and, in particular, upon tightening of the respective anchor bolts (not shown).

Another problem brilliantly solved by the present invention is that concerning the heating of the billiard table: as known, this requirement is particularly felt in the case of professional billiards where any trace of dampness should be removed from the coating cloth. The known technique essentially provides for two systems to obtain said heating:
- applying under the stone slab some insulating panels and inserting heating elements between the slab and the panels;
- performing millings into the lower surface of the slab and subsequently inserting and cementing therein some heating elements.

As can be understood, these solutions involve high production costs as well as running costs, also due to the considerable downward heat dispersion and the electric energy consumption deriving therefrom. In addition to this, the second of the aforecited solutions does not allow to realize a slab apt to comply with the most elementary electric safety rules.

This problem is now solved, according to the present invention, by providing to bury the heating elements into the cast slab. For this purpose, use will preferably be made of an armored resistance and, in any case, of a resistive wire resistance with adequate electric characteristics, covered with an electric insulation coating not apt to be damaged by the concrete casting.

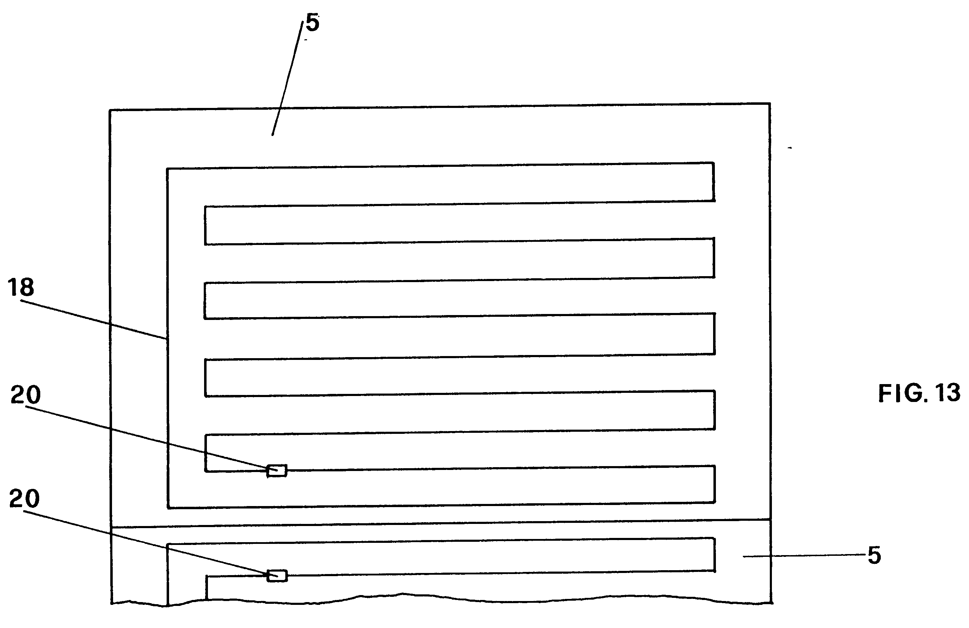

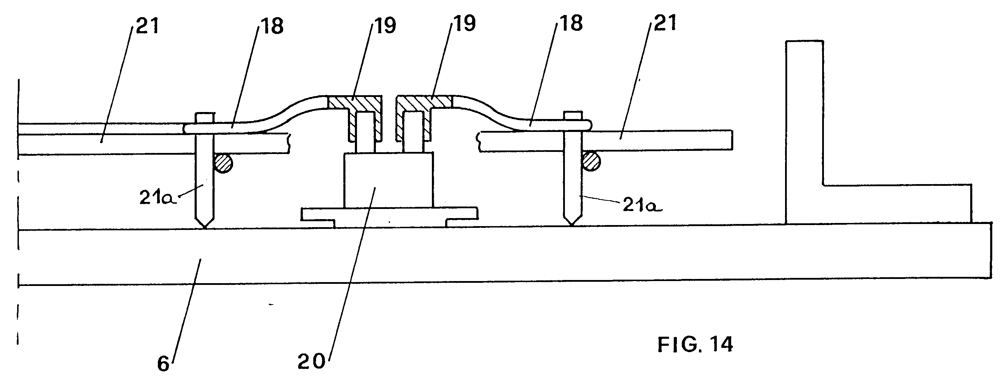

As shown in figs. 13 and 14, a resistance of this type - indicated by 18 and having terminals 19 connected to a plug 20 - is positioned into the formwork by being laid - for instance - over the wire net reinforcement 21, which is in turn supported onto the bottom plate 6 of the formwork by way of spacers 21a. Once the resistance 18 has been thus positioned and set, casting is carried out and the resistance as well as its terminal parts 19 and 20 remain buried therein. Preferably - as shown in fig. 13 - the resistance 18 is arranged as a coil throughout the surface of the billiard table, except close to its contour in order to avoid inappropriate thermal shocks on the wooden cushions which are anchored to the sides of the table.

The connecting plugs 20 are used both to feed external current to at least one of the sections of the table, and to guarantee a constant supply of electricity between the different sections.

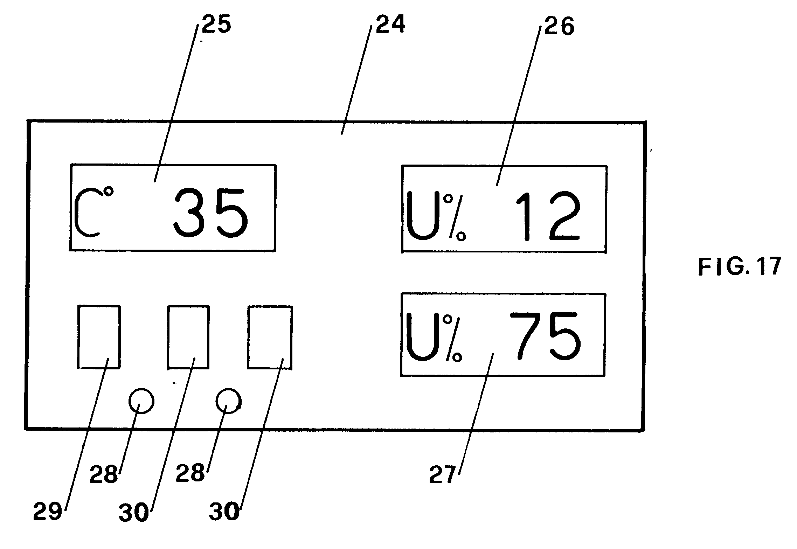

Likewise as for the elements described heretofore, it is possible to provide inside the table a housing for a temperature probe - to be associated to a thermostat for the regulation and control of the electric supply to the resistances - as well as for an hygrometer. The data read by such instruments can then be evidenced on a control board, for example like that illustrated in fig. 17. Said board 24 contains:
- a display 25 of the table temperature, which can also be used to set the reference temperatures of the thermostat;
- two displays 26 and 27 showing the levels of moisture detected by two hygrometers, for instance directly in correspondence of the cloth covering the table and, respectively, in the room which contains the billiard. By comparing said two levels, it is then possible to regulate the thermostat so as to obtain the best gaming conditions;
- some ordinary electric protection fuses 28, a general switch 29, and pilot lights 30 to control the working.

It is evident that said control board could incorporate, besides the already indicated elements, also a timing system associated to the thermostat; this would allow to obtain, for example, a higher reference temperature during gaming hours than the reference temperature during the periods of rest, or anyhow at night time or when the billiard room is closed. In fact - considering, on one hand, that it takes several hours to bring the billiard table from room temperature to gaming temperature and, on the other hand, that this sudden change of temperature creates too many stresses on said table - it is definitely appropriate to limit as far as possible the thermal head between said two periods. The use of a programmable timing system of this type is apt to solve this problem and, at the same time, it allows to save energy compared to the use of a simple thermostat, which would keep the billiard table always at gaming temperature.

## Claims

1. Concrete slab designed for the construction of a billiard table, characterized in that:
- it is produced with a cement mix comprising, as a special hydraulic binder, a mixture of: Portland cement, aluminous cement and anti shrink additive, a fine sand aggregate from 0 to 8 mm, a selected gravel aggregate from 8 to 20 mm, a filler of long fibers of synthetic material;
- it comprises a metal reinforcement;
- it also comprises a filler of material having a high specific weight, sufficient to bring the relative specific weight of the whole slab to a value exceeding 2.6; and
- a thin protective layer of shockproof coating is moreover applied onto the surface of the finished slab.

2. Concrete slab as in claim 1), wherein said selected gravel aggregate of the cement mix consists of basaltic gravel and/or baryte, apt to form also said filler of material with high specific weight.

3. Concrete slab as in claim 1), wherein said long fibers of synthetic material are polypropylene fibers having a length of at least 20 mm.

4. Concrete slab as in claim 2) or 3), comprising from 14 to 24% in weight of a special hydraulic binder, from 25 to 35% in weight of sand, from 35 to 54% in weight of baryte gravel, from 0.02% to 0.04% in weight of fibers of synthetic material, from 2 to 3% in weight of metal reinforcement, the remaining part being water.

5. Concrete slab as in claim 1), wherein said metal reinforcement comprises a steel excess, apt to form said filler of material with high specific weight.

6. Concrete slab as in claim 5), wherein said metal reinforcement comprises a light, electrowelded wire net, and a filler of steel rod pieces of the FeB 44 type with improved adherence, anchored to said net.

7. Concrete slab as in claim 5) or 6), comprising from 10 to 25% in weight of a special hydraulic binder, from 25 to 40% in weight of sand, from 25 to 40% in weight of basaltic gravel, from 0.02% to 0.04% in weight of fibers of synthetic material, from 10 to 15% in weight of metal reinforcement, the remaining part being water.

8. Concrete slab as in claim 1), wherein said shockproof and protection coating layer has a ground surface.

9. Concrete slab as in any one of the preceding claims, into the mass of which there are incorporated, during casting, some coupling inserts for the reciprocal anchorage of adjacent slabs and/or for anchoring the slabs to the support frame and/or for anchoring the side cushions of the table.

10. Concrete slab as in any one of claims 1) to 8), into the mass of which there is incorporated, during casting, an armored coil with heating elements.

11. Concrete slab as in claim 10), into the mass of which there are also incorporated, during casting, the connecting and feeding terminals and/or the electric control means for said heating elements.

## Patentansprüche

1. Betonplatte, die für die Erstellung eines Billardtisches ausgebildet ist, dadurch gekennzeichnet, daß:
- die Platte mit einer Zementmischung hergestellt ist, die als besonderen hydraulischen Binder eine Mischung aus Portlandzement, Tonerdezement und einem Antischrumpfzusatz, einem Feinsandaggregat von 0 bis 8 mm, einem ausgewählten Kiesaggregat von 8 bis 20 mm, einem Füllstoff mit langen Fasern aus synthetischem Material aufweist;
- die Platte eine Metallverstärkung aufweist;
- die Platte weiter ein Füllstoff aus einem Material mit einem hohen spezifischen Gewicht, das ausreichend ist, um dar relative spezifische Gewicht der ganzen Platte auf einen Wert über 2,6 zu bringen, aufweist; und
- weiter eine dünne Schutzschicht aus einer stoßfesten Beschichtung auf die Fläche der fertigen Platte aufgebracht ist.

2. Betonplatte nach Anspruch 1, wobei das ausgewählte Kiesaggregat aus einem Basaltzement und/oder Baryt besteht, das auch das Füllmaterial mit hohem spezifischen Gewicht bilden kann.

3. Betonplatte nach Anspruch 1, wobei die langen Fasern aus synthetischem Material Polypropylen-Fasern mit einer Länge von wenigstens 20 mm sind.

4. Betonplatte nach Anspruch 2 oder 3, mit 14 bis 24 Gew.% eines besonderen hydraulischen Binders, 25 bis Gew.% Sand, 35 bis 54 Gew. % Barytkies, 0,02 bis 0,04 Gew.% Fasern des synthetischen Materials, 2 bis 3 Gew.% der Metallverstärkung, Rest Wasser.

5. Betonplatte nach Anspruch 1, wobei die metallische Verstärkung einen Stahlüberschuß aufweist, der das Füllmaterial mit hohem spezifischen Gewicht bildet.

6. Betonplatte nach Anspruch 5, wobei die metallische Verstärkung ein leichtes, elektroverschweißtes Drahtnetz aufweist und einen Füller aus Stahlrohrstücken von FeB 44-Typ mit einer verbesserten Anhaftung, das an dem Netz verankert ist, aufweist.

7. Betonplatte nach Anspruch 5 oder 6, mit 10 bis 25 Gew.% eines besonderen hydraulischen Binders, 25 bis 50 Gew.% Sand, 25 bis 40 Gew. % Basaltkies, 0,02 bis 0,04 Gew.% Fasern aus einem synthetischen Material, 10 bis 15 Gew.% Metallverstärkung, Rest Wasser.

8. Betonplatte nach Anspruch 1, wobei die stoßfeste und schützende Beschichtungsschicht eine Grundfläche hat.

9. Betonplatte nach einem der vorangehenden Ansprüche, in deren Masse während des Gießens einige Kupplungselemente zur gegenseitigen Verankerung benachbarter Platten und/oder zum Verankern der Platten an dem Stützrahmen und/oder zum Verankern der Seitenkissen des Tisches eingebracht sind.

10. Betonplatte nach einem der Ansprüche 1 bis 8, in deren Masse wahrend des Gießens eine mit Heizelementen versehene bewehrte Spule eingebracht ist.

11. Betonplatte nach Anspruch 10, in deren Masse weiter während des Gießens die Verbindungs- und Speiseanschlüsse und/oder elektrische Steuermittel für die Heizelemente eingebracht sind.

## Revendications

1. Plaque en béton destinée à la construction d'une table de billard, caractérisée en ce que :
- elle est produite à partir d'un mélange de ciment comprenant, en tant que liant hydraulique spécial, un mélange : de ciment Portland, de ciment alumineux et d'un additif anti-retrait, un granulat de sable fin compris entre 0 et 8 mm, un granulat de gravier sélectionné compris entre 8 et 20 mm, une charge de fibres longues en matériau synthétique ;
- elle comprend une armature métallique ;
- elle comprend également une charge de matériau comportant un poids spécifique élevé, suffisant pour amener le poids spécifique relatif de la totalité de la plaque à une valeur dépassant 2,6 ; et
- une fine couche protectrice de revêtement antichoc est en outre appliquée sur la surface de la plaque terminée.

2. Plaque en béton selon la revendication 1, dans laquelle le granulat de gravier sélectionné du mélange de ciment est constitué d'un gravier basaltique ou d'une baryte, adapté pour également former la charge de matériau de poids spécifique élevé.

3. Plaque en béton selon la revendication 1, dans laquelle les fibres longues en matériau synthétique sont des fibres de polypropylène comportant une longueur d'au moins 20 mm.

4. Plaque en béton selon la revendication 2 ou 3, comprenant de 14 à 24% en poids de liant hydraulique spécial, de 25 à 35% en poids de sable, de 35 à 54% en poids de gravier de baryte, de 0,02% à 0,04% en poids de fibres en matériau synthétique, de 2 à 3% en poids d'armature métallique, la partie restante étant de l'eau.

5. Plaque en béton selon la revendication 1, dans laquelle l'armature métallique comprend un excès d'acier, adapté pour former la charge de matériau à poids spécifique élevé.

6. Plaque en béton selon la revendication 5, dans laquelle l'armature métallique comprend un treillis métallique électrosoudé léger et une charge de morceaux de tiges d'acier de type FeB 44 présentant une adhérence renforcée, ancrée sur le treillis.

7. Plaque en béton selon la revendication 5 ou 6, comprenant de 10 à 15% en poids d'un liant hydraulique spécial, de 25 à 40% en poids de sable, de 25 à 45% en poids de gravier basaltique, de 0,02% à 0,04% en poids de fibres en matériau synthétique, de 10 à 15% en poids d'armature métallique, la partie restante étant de l'eau.

8. Plaque en béton selon la revendication 1, dans laquelle la couche de protection antichoc comporte une surface polie.

9. Plaque en béton selon l'une quelconque des revendications précédentes, dans la masse de laquelle sont incorporés, pendant le moulage, des inserts de couplage pour l'ancrage réciproque de plaques adjacentes et/ou pour l'ancrage des plaques sur le cadre de support et/ou pour l'ancrage de coussins de bande de la table.

10. Plaque en béton selon l'une quelconque des revendications 1 à 8, dans la masse de laquelle est incorporée, pendant le moulage, une bobine protégée munie d'éléments de chauffage.

11. Plaque en béton selon la revendication 10, dans la masse de laquelle sont également incorporés, pendant le moulage, les bornes d'alimentation et de connexion et/ou les moyens de commande électrique des éléments de chauffage.
